# EUROPÄISCHE PATENTANMELDUNG

(11) **EP 2 270 375 A1**
(43) Veröffentlichungstag der Anmeldung: **05.01.2011**
(21) Anmeldenummer: 10164680.0
(22) Anmeldetag: 02.06.2010
(51) Int. Cl.: F16L 5/04, A62C 2/06, H02G 3/22

(54) **Brandschutzvorrichtung**

(30) Priorität: 29.06.2009 DE 102009027270
(71) Anmelder: HILTI Aktiengesellschaft, 9494 Schaan (LI)
(72) Erfinder: Monden, Thomas, 87778, Stetten (DE); Mordau, Ulf, 82285, Hattenhofen (DE)

(57) **Zusammenfassung**

Die Erfindung betrifft eine Brandschutzvorrichtung (21) zur Anordnung in einer zuvor erstellten Öffnung (12) in einem Bauteil (11) und zur Durchführung einer Leitung durch das Bauteil (11). Die Brandschutzvorrichtung (21) weist ein eine Durchführöffnung (23) für die Leitung aufweisendes Gehäuse (22) mit einem ersten Ende (25) und mit einem dem ersten Ende (25) gegenüberliegendes zweiten Ende (26) sowie eine Brandschutzmaterialeinlage (31) auf, die in der Durchführöffnung (23) des Gehäuses (22) vorgesehen ist. Im Bereich des ersten Endes (25) des Gehäuses (22) ist eine erste, am Gehäuse (22) angeordnete Festlegeeinrichtung (35) vorgesehen, mittels der die Brandschutzvorrichtung (21) am Bauteil (11) festlegbar ist. Im Bereich des zweiten Endes (26) des Gehäuses (22) ist eine zweite, am Gehäuse (22) angeordnete Festlegeeinrichtung (40) mit mehreren Festlegeabschnitten (41) vorgesehen, die von einer Einführstellung zum Einführen der Brandschutzvorrichtung (21) in die Öffnung (12) des Bauteils (11) in eine Festlegestellung zum Festlegen der Brandschutzvorrichtung (21) am Bauteil (11) überführbar ist.

## Beschreibung

### Technisches Gebiet

Die Erfindung betrifft eine Brandschutzvorrichtung zur Anordnung in einer zuvor erstellten Öffnung in einem Bauteil und zur Durchführung einer Leitung durch das Bauteil, der im Oberbegriff des Patentanspruchs 1 genannten Art.

### Stand der Technik

Um Leitungsdurchführungen in einem Bauteil, wie z. B. eine Wand oder eine Decke eines Gebäudes, abzuschotten, damit sich in einem Brandfall kein Feuer und Kaltrauch von einem Raum in einen anderen Raum ausbreiten kann, ist es beispielsweise aus der US 6,694,684 B2 bekannt, eine Brandschutzvorrichtung direkt in das zu durchdringende Bauteil einzugiessen.

Oftmals werden jedoch Bauteile erstellt, bevor die definitive Leitungsführung bekannt ist oder es werden Leitungen nachträglich zwischen zwei benachbarten Räumen vorgesehen. Für eine Durchführung der Leitung durch ein bereits erstelltes Bauteil werden, z. B. mit einen Bohrgerät mit einer Bohrkrone als Werkzeug, an der entsprechenden Stelle im Bauteil durchgehende Öffnungen erstellt. Zur Anordnung einer Brandabschottung für die durchgeführte Leitung und zur Justierung der Leitungsführung sind die Öffnungen im Bauteil oftmals grösser als der Gesamtdurchmesser der durchzuführenden Leitung bzw. Leitungen ausgebildet.

Aus der DE 90 11 951 U1 ist zur Durchführung einer Leitung durch das Bauteil eine nachträglich in der zuvor erstellten Öffnung anordnenbare Brandschutzvorrichtung bekannt, die ein eine Durchführöffnung für die Leitung aufweisendes Gehäuse mit einem ersten Ende und mit einem dem ersten Ende gegenüberliegendes zweiten Ende sowie eine Brandschutzmaterialeinlage aufweist, die in der Durchführöffnung des Gehäuses vorgesehen ist. Im Bereich des ersten Endes des Gehäuses ist ein radial nach aussen abragender Flansch als erste, am Gehäuse angeordnete Festlegeeinrichtung vorgesehen. In dem Flansch sind Durchbrechungen für Befestigungselemente vorgesehen, mit denen die Brandschutzvorrichtung am Bauteil festlegbar ist. Im Brandfall expandiert das Brandschutzmaterial unter Hitzeeinwirkung auf und verschliesst den Hohlraum sowie, bei einem abschmelzenden Rohr, den Rohrquerschnitt gegen Feuer und Rauch.

Nachteilig an der bekannten Lösung ist, dass die Aussenabmessungen des Gehäuses auf die Innenabmessungen der Öffnung abgestimmt sein müssen, um z. B. ein Verkippen der Brandschutzvorrichtung in der Öffnung beim Durchführen der Leitung zu verhindern. Somit müssen dem Anwender für jede übliche Öffnungsgrösse bzw. Bohrwerkzeuggrösse entsprechend ausgestaltete Brandschutzvorrichtungen zur Verfügung gestellt werden, was beim Hersteller wie auch beim Anwender einen grossen logistischen Aufwand bedingt.

### Darstellung der Erfindung

Aufgabe der Erfindung ist es, eine Brandschutzvorrichtung zu schaffen, welche die vorgenannten Nachteile nicht aufweist und insbesondere den Aufwand für die Installation bei einer Gewährleistung einer sicheren Festlegung bzw. Fixierung der Brandschutzvorrichtung am Bauteil reduziert.

Die Aufgabe ist durch die Merkmale des unabhängigen Anspruchs gelöst. Vorteilhafte Weiterbildungen sind in den Unteransprüchen dargelegt.

Gemäss der Erfindung ist im Bereich des zweiten Endes des Gehäuses eine zweite, am Gehäuse angeordnete Festlegeeinrichtung mit zumindest einem Festlegeabschnitt vorgesehen, die von einer Einführstellung zum Einführen der Brandschutzvorrichtung in die Öffnung des Bauteils in eine Festlegestellung zum Festlegen der Brandschutzvorrichtung am Bauteil überführbar ist.

In der Einführstellung der zweiten Festlegeeinrichtung lässt sich die Brandschutzvorrichtung einfach in die Öffnung einsetzen, z. B einschieben. Wenn die zweite Festlegeeinrichtung in die Festlegestellung überführt ist, z. B. über ein Verspannen der ersten Festlegeeinrichtung, ist die Brandschutzvorrichtung einfach am Bauteil festlegbar bzw. an diesem fixierbar. In einem Arbeitsschritt bzw. Montageschritt kann die erforderliche Brandabschottung für eine Leitungsdurchführung erstellt werden. Dabei ist die Brandschutzvorrichtung, im Gegensatz zu der Brandschutzvorrichtung gemäss der DE 90 11 951 U1, an zwei, axial zueinander beabstandeten Bereichen am Bauteil festgelegt.

Vorteilhaft ist der zumindest eine Festlegeabschnitt der zweiten Festlegeeinrichtung derart ausgebildet, dass die Überführung von der Einführstellung in die Festlegestellung selbstständig erfolgt. Alternativ wird das Überführen des zumindest einen Festlegeabschnitts von der Einführstellung in die Festlegestellung durch Betätigung eines Auslösemittels ausgelöst, das entweder bereits Bestandteil der Brandschutzvorrichtung ist, z. B. durch Betätigung der ersten Festlegeeinrichtung, oder durch ein separates, direkt am Gehäuse vorgesehenen Auslösemittel.

Weist die Brandschutzvorrichtung am Gehäuse im Bereich des ersten Endes und/oder im Bereich des zweiten Endes ein Dichtelement auf, wie z. B. ein ringförmiges, vorteilhaft elastisches Element, ist im festgelegten Zustand der Brandschutzvorrichtung nicht nur ein Brandschutz sowie eine Rauchdichtigkeit gegeben, sondern es besteht auch eine verbesserte Abschottung der Leitungsdurchführung gegen Durchtritt von Wasser. Des Weiteren ist eine Inspektion durch Dritte bei der montierten Brandschutzvorrichtung vereinfacht, da keine zusätzliche, im montierten Zustand von aussen nicht mehr sichtbare Elemente für eine sichere Brandabschottung der Leitungsdurchführung erforderlich sind. Die erfindungsgemässe Brandschutzvorrichtung ist derart einfach handhabbar, dass auch angelernte Arbeitskräfte diese sicher und fehlerfrei montieren können.

Vorteilhaft ist im Gehäuse ein die Durchführöffnung zumindest teilweise verschliessendes elastisches Dichtelement, z. B. eine Dichtmembran, vorgesehen, die von der durchzuführenden Leitung durchstossbar oder zumindest von dieser aufweitbar ist und die sich an den Aussendurchmesser der durchgeführten Leitung vorteilhaft dichtend anlegt. Ein derartiges Dichtelement schottet die Leitungsdurchführung zusätzlich auch gegen Kaltrauchgas ab.

Vorzugsweise ist die zweite Festlegeeinrichtung bei einer Betätigung der ersten Festlegeeinrichtung relativ zur ersten Festlegeeinrichtung entlang einer Längsachse des Gehäuses versetzbar, so dass beim Verspannen der ersten Festlegeeinrichtung die zweite Festlegeeinrichtung in Richtung der ersten Festlegeeinrichtung versetzt wird. Die Festlegung erfolgt über eine axiale Abstandsverringerung zwischen der ersten Festlegeeinrichtung und der zweiten Festlegeeinrichtung, was eine einfache Fixierung der Brandschutzvorrichtung gewährleistet. Bei der Betätigung der ersten Festlegeeinrichtung wird die zweite Festlegeeinrichtung von der Einführstellung in die Festlegestellung überführt, womit die Handhabbarkeit der Brandschutzvorrichtung weiter verbessert wird.

Bevorzugt umfasst die erste Festlegeeinrichtung ein im Bereich des ersten Endes des Gehäuses angeordnetes Aussengewinde und einen mit dem Aussengewinde in Eingriff bringbaren Flansch, womit die erste Festlegeeinrichtung einfach verspannbar ist. Zum Verspannen wird der Flansch in Richtung der entsprechenden Bauteilseite geschraubt, bis dieser an der Bauteilseite anliegt. Bei einem weiteren Schraubvorgang wird die zweite Festlegeeinrichtung in vorteilhafter Weise relativ in Richtung der ersten Festlegeeinrichtung versetzt und dabei die Brandschutzvorrichtung am Bauteil verspannt.

Der Flansch weist vorteilhaft eine ringförmige Anlagefläche auf, deren Aussendurchmesser grösser als die grösste Innenerstreckung der Öffnung im Bauteil ist. Damit deckt im verspannten Zustand der Brandschutzvorrichtung der Flansch die Öffnung vollständig ab, womit diese dicht verschlossen ist. Die Dichtigkeit an dieser Bauteilseite kann mit der Anordnung eines zusätzlichen, zwischen dem Flansch und der entsprechenden Bauteilseite zu liegen kommenden Dichtelements, wie beispielsweise ein elastisches Element, z. B. ein O-Ring, zusätzlich verbessert werden.

Alternativ dazu ist der Flansch über eine bajonettartige Verbindung im Bereich des ersten Endes des Gehäuses angeordnet.

In einer alternativen Ausführungsform umfasst die erste Festlegeeinrichtung eine z. B. mit der benachbarten Bauteilseite in Anlage bringbare Hebeeinrichtung, welche beim Verspannen sich in vorteilhafter Weise an dieser Bauteilseite abstützt und dabei ein Versetzen der zweiten Festlegeeinrichtung in Richtung der ersten Festlegeeinrichtung bewirkt. Beispielsweise ist diese Hebeeinrichtung als ein entsprechend ausgebildeter Exzenterhebel ausgebildet.

In einer weiteren Alternative sind am Flansch und/oder im Bereich des ersten Endes des Gehäuses widerhakenartige Elemente vorgesehen, welche ein Verschieben des Flansches in Richtung des zweiten Endes des Gehäuses ermöglichen, ein Verschieben des Flansches in Richtung des ersten Endes des Gehäuses jedoch verhindern.

Allen Varianten, welche eine nicht abschliessende Aufzählung darstellen, ist gemeinsam, dass sie eine axiale Abstandsverringerung zwischen der ersten Festlegeeinrichtung und der zweiten Festlegeeinrichtung und somit einfache Festlegung der Brandschutzvorrichtung am Bauteil ermöglichen.

Vorzugsweise hintergreift der zumindest eine Festlegeabschnitt der zweiten Festlegeeinrichtung in deren Festlegestellung einen Randbereich der Öffnung im Bauteil, womit die Brandschutzvorrichtung einfach und sicher an dem Bauteil festlegbar ist. Vorteilhaft werden beide Ränder der Öffnung an den beiden einander gegenüberliegenden Bauteilseiten im verspannten Zustand der Brandschutzvorrichtung von der ersten Festlegeeinrichtung beziehungsweise der zweiten Festlegeeinrichtung hintergriffen.

Bevorzugt ist der zumindest eine Festlegeabschnitt der zweiten Festlegeeinrichtung ein mit dem Gehäuse verbundenes Federelement, das sich beim Einführen der Brandschutzvorrichtung in die Öffnung im Bauteil verformen und beim Festlegen der Brandschutzvorrichtung in der Öffnung im Bauteil wieder in eine Ausgangsstellung bewegen kann, welche vorteilhaft etwa der Festlegestellung des zumindest einen Festlegeabschnitts entspricht. Das Federelement ist beispielsweise aus einem gestanzten und umgeformten Federstahl gefertigt und formschlüssig, z. B. durch Punktschweissen an dem Gehäuse festgelegt. Alternativ ist das Federelement ein Abschnitt des Gehäuses und wird gleichzeitig mit diesem ausgebildet, womit eine einfach herstellbare, einteilige Lösung vorliegt.

In einer erfindungsgemässen Variante ist der zumindest eine Festlegeabschnitt der zweiten Festlegeeinrichtung scharnierartig an dem Gehäuse festgelegt, womit dieser durch Umlegen bzw. Umklappen von der Einführstellung in die Festlegestellung und gegebenenfalls auch von der Festlegestellung in die Einführstellung überführbar ist. Unter scharnierartig wird in diesem Zusammenhang eine zumindest zweiteilige Anordnung verstanden, bei der ein Teil beispielsweise über eine gelenkige Anbindung, z. B. um ein Schwenkgelenk gegenüber dem anderen Teil verschwenkbar ist.

An einer Brandschutzvorrichtung können auch mehrere, unterschiedlich ausgebildete Festlegeabschnitte vorgesehen sein, welche zusammen die zweite Festlegeeinrichtung ausbilden. Weiter können im Bereich des zweiten Endes des Gehäuses mehrere, gleichartig oder unterschiedlich ausgebildete Festlegeabschnitte vorgesehen sein, die in Bezug auf die Längsachse des Gehäuses axial zueinander beabstandet und vorteilhaft auch radial zueinander versetzt am Gehäuse angeordnet sein können. Beispielsweise hintergreift ein Teil der Festlegeabschnitte einen Randbereich der Öffnung und ein anderer Teil der Festlegeabschnitte verhakt sich in der Wandung der Öffnung.

Vorzugsweise ist der zumindest eine Festlegeabschnitt der zweiten Festlegeeinrichtung federbeaufschlagt, wobei der zumindest eine Festlegeabschnitt sich in seiner Grundstellung vorteilhaft in der Festlegestellung befindet und entgegen einer Federkraft in die Einführstellung überführbar ist. Vorteilhaft ist dazu ein Federelement vorgesehen, das zwischen der Aussenseite des Gehäuses und dem zumindest einen Festlegeabschnitt angeordnet ist.

Bevorzugt ist das freie Ende des zumindest einen Festlegeabschnitts in der Einführstellung der zweiten Festlegeeinrichtung der ersten Festlegerichtung zugewandt, womit insbesondere bei einem axialen Versetzen der zweiten Festlegeeinrichtung in Richtung der ersten Festlegerichtung ein Verhaken des freien Endes z. B. an der Wandung der Öffnung im Bauteil bzw. ein Hintergreifen eines Randes der Öffnung in einfacher Art und Weise sichergestellt ist.

### Kurze Beschreibung der Zeichnungen

Die Erfindung wird nachstehend anhand von Ausführungsbeispielen näher erläutert. Es zeigen:
- Fig. 1: Ein erstes Ausführungsbeispiel einer Brandschutzvorrichtung beim Einführen in eine Öffnung eines Bauteils;
- Fig. 2: die in Fig. 1 gezeigte Brandschutzvorrichtung in dem am Bauteil festgelegten Zustand;
- Fig. 3: ein zweites Ausführungsbeispiel einer Brandschutzvorrichtung in einer Perspektive;
- Fig. 4: ein Detailschnitt durch einen Festlegeabschnitt der zweiten Festlegeeinrichtung der Brandschutzvorrichtung gem. Fig. 3 in der Festlegestellung; und
- Fig. 5: ein Detailschnitt durch den Festlegeabschnitt gem. Fig. 4 in der Einführstellung.

Grundsätzlich sind in den Figuren gleiche Teile mit den gleichen Bezugszeichen versehen.

### Wege zur Ausführung der Erfindung

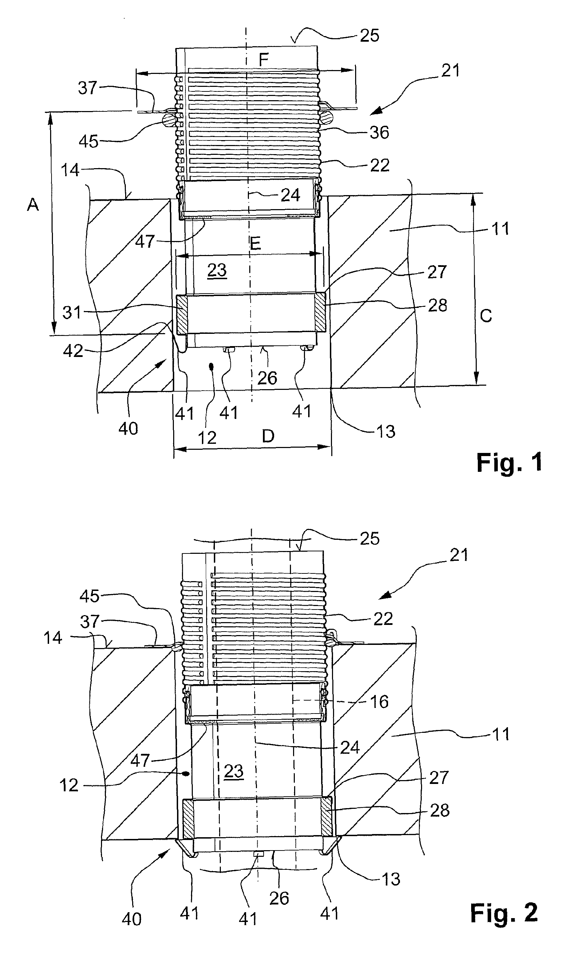

Die in den Figuren 1 und 2 dargestellte Brandschutzvorrichtung 21 wird nachträglich in einer zuvor erstellten Öffnung 12 in einem Bauteil 11 angeordnet und dient der Durchführung sowie Brandabschottung einer Leitung 16 durch das Bauteil 11.

Die Brandschutzvorrichtung 21 weist ein zylindrisches, sich entlang einer Längsachse 24 erstreckendes Gehäuse 22 auf, das eine Durchführöffnung 23 für die Leitung 16 ausbildet sowie ein erstes Ende 25 und ein dem ersten Ende 25 gegenüberliegendes zweites Ende 26 aufweist. Weiter weist das Gehäuse 22 einen, der Durchführöffnung 23 offenen Aufnahmeraum 27 auf, in dem eine Brandschutzmaterialeinlage 31 aus intumeszierendem Material vorgesehen ist. Die Aussenwandung des Aufnahmeraums 27 ist mit Durchbrüchen 28 versehen, deren Funktion nachfolgend noch beschrieben wird. Der maximale Aussendurchmesser E des Gehäuses 22 ist kleiner als der Innendurchmesser D der Öffnung 12 im Bauteil 11.

Das Gehäuse 22 ist im Bereich des ersten Endes 25 mit einem Aussengewinde 36 versehen. Weiter ist ein Flansch 37 vorgesehen, der mit dem Aussengewinde 36 in Eingriff bringbar ist und einen Aussendurchmesser F grösser als der Innendurchmesser D der Öffnung 12 im Bauteil 11 aufweist. Das Aussengewinde 36 bildet zusammen mit dem Flansch 37 eine erste, am Gehäuse 22 angeordnete Festlegeeinrichtung 35 der Brandschutzvorrichtung 21.

Am zweiten Ende 26 des Gehäuses 22 sind an dessen Aussenseite umfänglich gleichmässig verteilt, eine Mehrzahl von Federelementen vorgesehen, die Festlegeabschnitte 41 einer zweiten, am Gehäuse 22 angeordneten Festlegeeinrichtung 40 ausbilden. Die Festlegeeinrichtung 40 ist, wie nachher noch dargelegt wird, von einer Einführstellung zum Einführen der Brandschutzvorrichtung 21 in die Öffnung 12 des Bauteils 11 in eine Festlegestellung zum Festlegen der Brandschutzvorrichtung 21 am Bauteil 11 überführbar.

Die Federelemente sind aus einem Federstahl gefertigt und hier mittels Punktschweissen stoffschlüssig an der Aussenseite des Gehäuses 22 festgelegt. Die freien Enden 42 der Festlegeabschnitte 41 sind in der Einführstellung der zweiten Festlegeeinrichtung 40 der ersten Festlegerichtung 30 zugewandt. Im unbelasteten Zustand ist der Aussendurchmesser des die freien Enden 42 der Festlegeabschnitte 41 umgebenden Hüllkreises grösser als der Innendurchmesser D der Öffnung 12 im Bauteil 11.

Nachfolgend wird der Montagevorgang zur Anordnung und Festlegung der Brandschutzvorrichtung 21 dargelegt.

Zum Montieren der Brandschutzvorrichtung 21 ist der Abstand A zwischen den freien Enden 42 der Festlegeabschnitte 41 und dem Flansch 37 derart eingestellt, dass dieser grösser als die Dicke C des Bauteils 11 ist. Die Brandschutzvorrichtung 21 wird mit dem zweiten Ende 26 des Gehäuses 22 voran in die Öffnung 11 eingeführt, wobei die Festlegeabschnitte 41 von der Wandung der Öffnung 12 jeweils in Richtung der Aussenseite des Gehäuses 22 gebogen werden. Sobald die freien Enden 42 der Festlegeabschnitte 41 ausserhalb der Öffnung 12 zu liegen kommen, dehnen sich diese auf ihre ursprünglichen Ausmasse aus, so dass die Festlegeabschnitte 41 den Randbereich 13 der Öffnung 12 im Bauteil 11 hintergreifen können.

Anschliessend wird der Flansch 37 in Richtung der Bauteilseite 14 des Bauteils 11 geschraubt, welche dem Randbereich 13 der Öffnung 12 gegenüberliegt. Wenn der Flansch 37 mit der Bauteilseite 14 in Anlage kommt, wird bei einer weiteren Schraubbewegung des Flansches 37 die zweite Festlegeeinrichtung 40 relativ zur ersten Festlegeeinrichtung 30 entlang der Längsachse des Gehäuses versetzt, bis die Festlegeabschnitte 41 der zweiten Festlegeeinrichtung 40 in der Festlegestellung sind, wobei der Randbereich 13 der Öffnung 12 im Bauteils 11 an mehreren Stellen hintergriffen wird. Durch die axiale Abstandsverringerung zwischen der ersten Festlegeeinrichtung 35 und der zweiten Festlegeeinrichtung 40 ist die Brandschutzvorrichtung 21 sicher am Bauteil 11 festgelegt.

An der Unterseite des Flansches 37, die der zweiten Festlegeeinrichtung 40 zugewandt ist, ist ein elastischer O-Ring als Dichtelement 45 vorgesehen. Das Dichtelement 45 ist im verspannten Zustand der Brandschutzvorrichtung 21 zwischen dem Flansch 37 und der Bauteilseite 14 des Bauteils 11 eingeklemmt und dichtet die Leitungsdurchführung im montierten Zustand der Brandschutzvorrichtung 21 zusätzlich gegen Wassereintritt ab.

Weiter ist im Gehäuse 22 ein die Durchführöffnung 23 teilweise verschliessendes elastisches Dichtelement in Form einer Dichtmembran 47 vorgesehen, die von der durchzuführenden Leitung 16 aufweitbar ist und die sich an den Aussendurchmesser der durchgeführten Leitung 16 dichtend anlegt.

Im Brandfall expandiert die Brandschutzmaterialeinlage 31 einerseits in Richtung der Leitung 16, wobwi im Fall eines abschmelzenden Rohres dieses vollständig abgedrückt wird, und andererseits durch die Durchbrüche 28 in der Aussenwandung des Aufnahmeraums 27, wobei ein etwaiger Spalt zwischen der Wandung der Öffnung 12 und der Brandschutzvorrichtung 21 verschlossen wird.

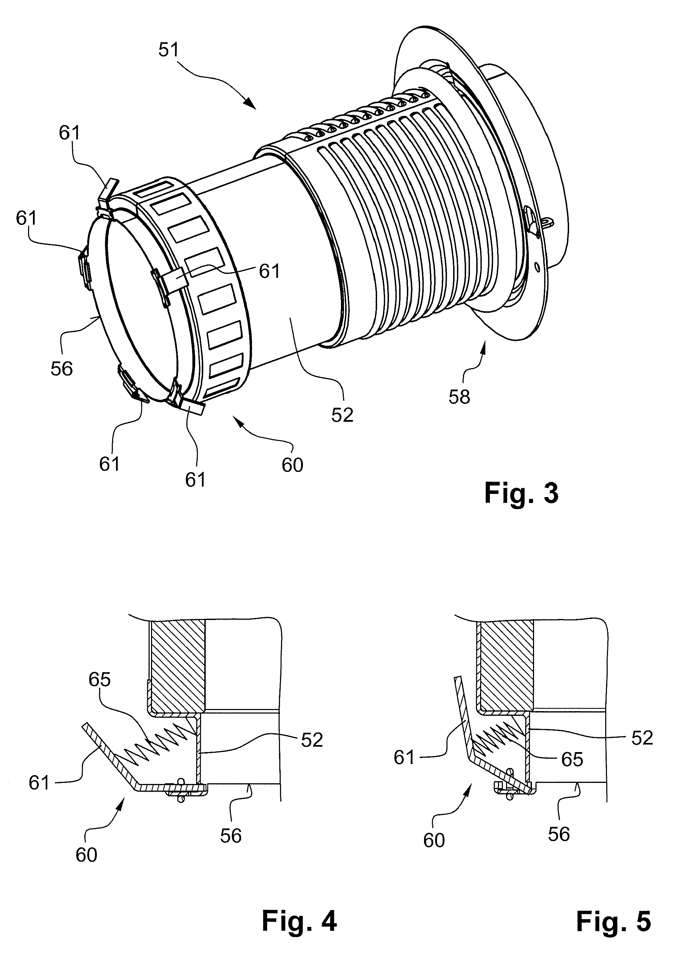

Die in den Figuren 3 bis 5 gezeigte Brandschutzvorrichtung 51 unterscheidet sich von der zuvor dargelegten Brandschutzvorrichtung 21 durch eine andere Ausgestaltung der zweiten Festlegeeinrichtung 60 im Bereich des zweiten Endes 56 des Gehäuses 52. Die zweite Festlegeeinrichtung 60 weist in diesem Ausführungsbeispiel fünf Festlegeabschnitte 61 auf.

Die Festlegeabschnitte 61 sind scharnierartig am Gehäuse 52 festgelegt und durch Verschwenken von einer Einführstellung zum Einführen der Brandschutzvorrichtung 51 in die Öffnung 12 des Bauteils 11 in eine Festlegestellung zum Festlegen der Brandschutzvorrichtung 51 am Bauteil 11 überführbar. Zwischen jedem Festlegeabschnitt 61 der zweiten Festlegeeinrichtung 60 und der Aussenseite des Gehäuses 52 ist jeweils eine Druck-Schraubenfeder als Federelement 65 vorgesehen, welche die Festlegeabschnitte 61 in Richtung der Einführstellung federbeaufschlagt.

## Patentansprüche

1. Brandschutzvorrichtung zur Anordnung in einer zuvor erstellten Öffnung (12) in einem Bauteil (11) und zur Durchführung einer Leitung (16) durch das Bauteil (11), wobei
die Brandschutzvorrichtung (21; 51) ein eine Durchführöffnung (23) für die Leitung (16) aufweisendes Gehäuse (22; 52) mit einem ersten Ende (25) und mit einem dem ersten Ende (25) gegenüberliegendes zweiten Ende (26; 56) sowie eine Brandschutzmaterialeinlage (31) aufweist, die in der Durchführöffnung (23) des Gehäuses (22; 52) vorgesehen ist, wobei
im Bereich des ersten Endes (25) des Gehäuses (22; 52) eine erste, am Gehäuse (22; 52) angeordnete Festlegeeinrichtung (35; 58) vorgesehen ist, mittels der die Brandschutzvorrichtung (21; 51) am Bauteil (11) festlegbar ist, **dadurch gekennzeichnet, dass**
im Bereich des zweiten Endes (26; 56) des Gehäuses (22; 52) eine zweite, am Gehäuse (22; 52) angeordnete Festlegeeinrichtung (40; 60) mit zumindest einen Festlegeabschnitt (41; 61) vorgesehen ist, die von einer Einführstellung zum Einführen der Brandschutzvorrichtung (21; 51) in die Öffnung (12) des Bauteils (11) in eine Festlegestellung zum Festlegen der Brandschutzvorrichtung (21; 51) am Bauteil (11) überführbar ist.

2. Brandschutzvorrichtung nach Anspruch 1, **dadurch gekennzeichnet, dass** die zweite Festlegeeinrichtung (40; 60) bei einer Betätigung der ersten Festlegeeinrichtung (35; 58) relativ zur ersten Festlegeeinrichtung (35; 58) entlang einer Längsachse (24) des Gehäuses (22; 52) versetzbar ist.

3. Brandschutzvorrichtung nach Anspruch 2, **dadurch gekennzeichnet, dass** die erste Festlegeeinrichtung (35; 58) ein im Bereich des ersten Endes (25) des Gehäuses (22; 52) angeordnetes Aussengewinde (36) und einen mit dem Aussengewinde (36) in Eingriff bringbaren Flansch (37) umfasst.

4. Brandschutzvorrichtung nach einem der Ansprüche 1 bis 3, **dadurch gekennzeichnet, dass** der zumindest eine Festlegeabschnitt (41) der zweiten Festlegeeinrichtung (40) in deren Festlegestellung einen Randbereich der Öffnung (12) im Bauteil (11) hintergreift.

5. Brandschutzvorrichtung nach einem der Ansprüche 1 bis 4, **dadurch gekennzeichnet, dass** der zumindest eine Festlegeabschnitt (41) der zweiten Festlegeeinrichtung (40) ein mit dem Gehäuse (22) verbundenes Federelement ist.

6. Brandschutzvorrichtung nach einem der Ansprüche 1 bis 5, **dadurch gekennzeichnet, dass** der zumindest eine Festlegeabschnitt (61) der zweiten Festlegeeinrichtung (60) scharnierartig an dem Gehäuse (52) festgelegt ist.

7. Brandschutzvorrichtung nach Anspruch 7, **dadurch gekennzeichnet, dass** der zumindest eine Festlegeabschnitt (61) der zweiten Festlegeeinrichtung (60) federbeaufschlagt ist.

8. Brandschutzvorrichtung nach einem der Ansprüche 1 bis 7, **dadurch gekennzeichnet, dass** das freie Ende (42; 62) des zumindest einen Festlegeabschnitts (41; 61) in der Einführstellung der zweiten Festlegeeinrichtung (40; 60) der ersten Festlegerichtung (35; 58) zugewandt ist.
